# EUROPEAN PATENT SPECIFICATION

(11) **EP 3 734 035 B1**
(45) Date of publication and mention of the grant of the patent: **28.02.2024**
(21) Application number: 17936741.2
(22) Date of filing: 29.12.2017
(51) Int. Cl.: F01N 3/28, F01N 13/14

(54) **SCR SYSTEM UREA MIXER AND SCR SYSTEM**
SCR-SYSTEM-HARNSTOFFMISCHER UND SCR-SYSTEM
MÉLANGEUR D'URÉE DE SYSTÈME SCR ET SYSTÈME SCR

(30) Priority: 26.12.2017 CN 201711433169
(43) Date of publication of application: 04.11.2020
(73) Proprietor: Weichai Power Co., Ltd., Weifang, Shandong 261061 (CN); Weichai Power Emission Solutions Technology Co., Ltd., Weifang, Shandong 261061 (CN)
(72) Inventor: GAO, Wei, Weifang, Shandong 261061 (CN); LIU, Xinglong, Weifang, Shandong 261061 (CN); YAN, Juan, Weifang, Shandong 261061 (CN); WANG, Dongsheng, Weifang, Shandong 261061 (CN); WANG, Fengshuang, Weifang, Shandong 261061 (CN); WANG, Yibao, Weifang, Shandong 261061 (CN)
(74) Representative: Plasseraud IP
(86) International application number: PCT/CN2017/119693
(87) International publication number: WO 2019/127311

(56) References cited:
- WO-A1-2014/167353
- CN-A- 105 822 396
- CN-A- 106 194 347
- CN-A- 106 567 763
- CN-A- 106 731 932
- CN-U- 206 477 903
- DE-U1-202007 010 324
- JP-A- 2012 047 119

## Description

### TECHNICAL FIELD

The present disclosure relates to the technical field of SCR systems for vehicle engine exhaust gas treatment, and in particular to an SCR system urea mixer and an SCR system.

### BACKGROUND

Selective Catalytic Reduction (SCR) technology refers to the use of ammonia, ammonia water, urea or hydrocarbons as reducing agents, wherein under the condition that the concentration of oxygen is two orders of magnitude higher than the concentration of NOₓ, the NOₓ is preferentially reduced into N₂ with high selectivity.

According to the type of reducing agent, existing SCR technology can be divided into urea SCR technology in which NH₃ produced by urea decomposition is used as the reducing agent and hydrocarbon SCR technology in which hydrocarbon is used as the reducing agent. At present, the hydrocarbon SCR technology is still under further research, and there are not many practical applications thereof; whereas the urea SCR technology is more mature and has more practical applications.

Being non-toxic, urea does not have a great influence on the environment and human health, and is convenient to store and transport. Therefore, it is more suitable to serve as the reducing agent for NOₓ in vehicle SCR systems. In Europe, many heavy-duty trucks with a Urea-SCR system installed thereon have already been put into use, and have successfully passed road reliability tests. However, since the freezing point of the urea aqueous solution is only -11°C, the urea may crystallize at low temperatures. In order to prevent the crystallization from affecting the operation of diesel engines, it is necessary to take corresponding heat preservation measures.

WO 2014/167353 discloses a flowhood and emissions cleaning module. The flowhood is provided to which an upstream conduit and a downstream conduit of an emissions cleaning module can be connected. The flowhood comprises a first section and a second section. The second section comprises a first aperture for connection to the upstream conduit and a second aperture for connection to the downstream conduit. The first and second apertures may face substantially in the same direction to permit a compact arrangement. A body of the first section may be shaped to channel gas flow from the first aperture to the second aperture. An emissions cleaning module including such a flowhood is also described.

CN 206477903U provides an exhaust aftertreatment device which includes a first hybrid chamber assembly, a second hybrid chamber assembly and a catalyst carrier assembly. The first hybrid chamber assembly includes a first casing provided with a first hybrid chamber, an intake pipe and a hybrid tube at least partially located in the first hybrid chamber. The first hybrid tube is provided with a first tube body located in the first hybrid chamber and a second tube body extending out of the first hybrid chamber, wherein a lateral wall of the first tube body is provided with a plurality of spinning disks which are located in the first hybrid chamber. The exhaust aftertreatment device further includes a porous pipe located in the first hybrid tube. In the axial direction of the porous pipe, the area of the porous pipe where the holes are located completely covers the length of the spinning disk. With this kind of arrangement, the spray-cone angle may be protected, and it is possibly to try to prevent the urea liquid from directly beating on the spinning disk, thereby reducing the crystallization risk.

In existing urea mixers, a mixing path of exhaust gas and the urea solution is short, and the flow rate of gas is reduced after passing through mixing blades, which makes it easy to lead to urea crystallization on a back side of spiral blades and a back side of a fan structure with a spiral opening; in addition, since there is no heat preservation measures, heat dissipation of the mixer is fast, which is not advantageous for decomposition and atomization of the urea, thus resulting in urea crystallization.

### SUMMARY

The object of the present disclosure is to solve urea crystallization, and the object is achieved by the following technical solutions.

The invention is defined in the appended claims.

In the present description and drawings, any examples and technical descriptions of apparatuses, products and/or methods which are not covered by the claims should be taken as background art or examples useful for understanding the invention.

The present disclosure has the following advantages:
(1) By adopting the rotating structure and the porous structure, the present disclosure enables the urea and engine exhaust to be fully mixed, thus presenting a good mixing uniformity and effectively avoiding deposition of the urea on pipe wall.
(2) With the heat preservation measures being provided, the present disclosure can rapidly evaporate and atomize the urea solution and prevent the urea from crystallizing.
(3) Due to a modular design, the present disclosure can be applied to different engines and SCR systems, and has strong versatility.
(4) The present disclosure has no complicated connection and installation structures, is convenient to install, and has high reliability.

### BRIEF DESCRIPTION OF THE DRAWINGS

Upon reading a detailed description of the preferred embodiments below, various other advantages and benefits will become clear to those skilled in the art. The drawings are only for the purpose of illustrating the preferred embodiments, and should not be considered as limiting the present disclosure. Throughout the drawings, identical parts are denoted by identical reference signs, in which:
FIG. 1 is a schematic structural view of an SCR system urea mixer provided by an embodiment of the present disclosure;
FIG. 2 is an exploded view of an SCR system urea mixer provided by an embodiment of the present disclosure; and
FIG. 3 is a cross-sectional view of an SCR system urea mixer provided by an embodiment of the present disclosure.

Reference signs in the drawings:
11: intake air cone pipe; 12: intake air straight pipe; 21: intake air rectifying pipe; 22: porous pipe;
211: airflow rotating blade; 3: urea nozzle installation plate; 41: first heat insulation shield;
42: second heat insulation shield; 5: heat insulation layer.

### DETAILED DESCRIPTION

Hereinafter, exemplary embodiments of the present disclosure will be described in more detail with reference to the accompanying drawings. Although the exemplary embodiments of the present disclosure are shown in the drawings, it should be understood that the present disclosure can be implemented in various forms and should not be limited by the embodiments set forth herein. Rather, these embodiments are provided to enable a more thorough understanding of the present disclosure and to fully convey the scope of the present disclosure to those skilled in the art.

Exhaust gas discharged from an engine enters a post-treatment device through an air intake port, is processed by a DOC catalyst, a DPF catalyst, a urea injection and mixing unit, and an SCR catalyst in sequence, and is finally discharged from the post-treatment device.

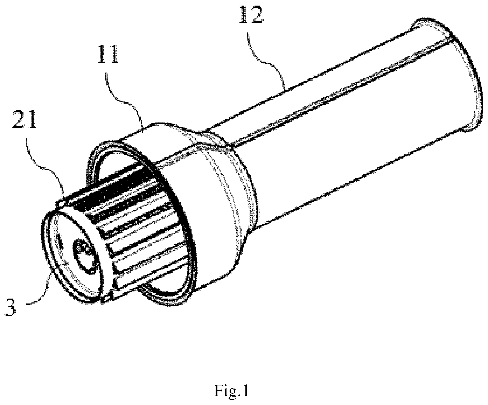

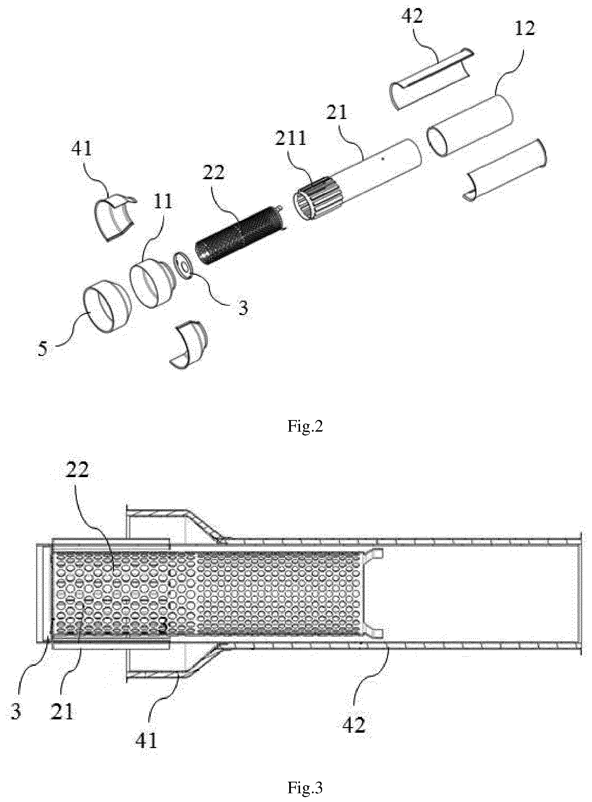

FIGS. 1 to 3 show schematic structural views of an SCR system urea mixer according to an embodiment of the present disclosure. As shown in FIGS. 1 to 3, the SCR system urea mixer includes an outer pipe and an inner pipe disposed in the outer pipe. The outer pipe includes an intake air cone pipe 11 and an intake air straight pipe 12 connected with the intake air cone pipe 11, the inner pipe includes an intake air rectifying pipe 21 and a porous pipe 22, the porous pipe 22 is sleeved inside the intake air rectifying pipe 21, and the intake air rectifying pipe 21 is provided with airflow rotating blades 211 configured to rotate exhaust gas entering the intake air cone pipe 11.

The SCR system urea mixer is provided at the air intake port thereof with a urea nozzle installation plate 3. The urea nozzle installation plate 3 is installed at an inlet of the intake air rectifying pipe 21, and the urea nozzle installation plate 3 is provided with an installation hole matching a urea nozzle which injects urea into the mixer via the installation hole so that the urea is mixed with the exhaust gas injected into the mixer.

A diameter of the intake air cone pipe 11 gradually decreases in an inflow direction of airflow. The intake air cone pipe 11 and the intake air straight pipe 12 are designed to have a reduced diameter and a smooth transition therebetween. A length of the inner porous pipe 22 extends to a middle position of the intake air straight pipe 12, so that the airflow can still pass through the inner porous pipe 22 for rotation after flowing through the blade structure of the intake air rectifying pipe 21, and the flow rate of the gas will not decrease rapidly, thereby preventing urea crystallization in the intake air straight pipe 12.

The number of pores, the diameter of pores and the arrangement of pores in the porous pipe 22 may be adjusted. In one embodiment, the diameter of pores near the intake air cone pipe 11 is larger, and the diameter of pores near the intake air straight pipe 12 is smaller, so that the urea and the airflow can be fully mixed at the intake air cone pipe 11 under the action of the airflow rotating blades 211.

In addition, outer portions of the mixer intake air cone pipe 11 and the intake air straight pipe 12 are each provided with a heat insulation shield to wrap the outer pipe so as to prevent the airflow from exchanging heat with an external airflow after entering the mixer, lowering the temperature of the exhaust gas, affecting evaporation and atomization of urea solution, and causing urea crystallization. In one embodiment, the heat insulation shield 4 is heat insulation cotton.

The outside of the intake air cone pipe 11 is wrapped with a first heat insulation shield 41, and the outside of the intake air straight pipe 12 is wrapped with a second heat insulation shield 42. In a specific embodiment, the first heat insulation shield 41 and the second heat insulation shield 42 may be integrally wrapped around the outer pipe, or may be wrapped around the intake air cone pipe 11 and the intake air straight pipe 12 respectively, which is not specifically limited herein.

In order to prevent the urea from crystallizing in the intake air cone pipe 11, a heat insulation layer 5 is also provided in the intake air cone pipe 11.

Installation angles of the airflow rotating blades 211 are all acute angles, that is, the airflow rotating blades 211 are distributed radially on the outside of the intake air rectifying pipe 21, so that the incoming airflow rotates at a high speed and forms a swirl flow.

The specific working principle of the present disclosure is as follows:
The engine exhaust gas enters the mixer through the intake air rectifying pipe 21, and the exhaust gas rotates at a high speed in the intake air cone pipe 11 under the dual action of the intake air rectifying pipe 21 and the inner porous pipe 22, so that the urea solution ejected from the urea nozzle is sufficiently mixed with the exhaust gas. The airflow further enters the intake air straight pipe 12 through the inner porous pipe 22. Under the action of the inner porous pipe 22, the airflow continues to rotate and mix in the intake air straight pipe 12, and finally flows out of the mixer through the intake air straight pipe 12.

Under the dual action of the intake air rectifying pipe 21 and the inner porous pipe 22, the airflow generates strong disturbance when it flows through the airflow rotating blades 211, which wraps and takes away the urea solution ejected from the urea nozzle. Under the action of the airflow rotating at a high speed, the urea solution is rapidly evaporated and atomized, the contact of the urea solution with an inner wall of the intake air cone pipe 11 is reduced, and urea crystallization is avoided.

In a specific embodiment, the SCR system mixer of the present disclosure can realize the modularization of the structure, may be applied to engines with different displacements, and has strong versatility. According to the operating conditions of the engine, a reasonable distribution of air flow can be achieved by adjusting the blade angle, length and number of the airflow rotating blades 211 on the intake air rectifying pipe 21; and by adjusting the number, diameter and arrangement of pores in the inner porous pipe 22, a reasonable match with the engine is achieved.

The urea mixer of the present disclosure can be applied to SCR systems with different structures, and has strong versatility. For example, it can be applied to different SCR systems such as a box-type SCR system, an S-type SCR system and a U-type SCR system.

In addition, the SCR system mixer of the present disclosure has no complicated connection and installation structures, is convenient to install, and has high reliability.

The present disclosure also provides an SCR system having the above SCR system urea mixer installed thereon.

The SCR system urea mixer provided by the present disclosure enables the urea solution to be fully mixed with the engine exhaust gas. When the airflow enters the SCR catalyst through the mixer, the distribution of NH₃ on a front end face of the SCR catalyst is more uniform, thus increasing the utilization rate of the SCR catalyst and improving the NOₓ conversion efficiency of the engine exhaust gas.

## Claims

1. An SCR system urea mixer, comprising an outer pipe and an inner pipe disposed in the outer pipe, wherein the outer pipe comprises an intake cone pipe (11) and an intake straight pipe (12) connected with the intake cone pipe (11) , the inner pipe comprises an intake rectifying pipe (21) and a porous pipe (22), the porous pipe (22) is sleeved inside the intake rectifying pipe (21), and the intake rectifying pipe (21) is provided with an exhaust gas flow rotating mechanism configured to rotate exhaust gas entering the intake cone pipe (11), the exhaust gas flow rotating mechanism is partially disposed inside the intake cone pipe (11), a urea nozzle installation plate (3) is provided at an intake port of the SCR system urea mixer, and the urea nozzle installation plate (3) is installed at an inlet of the intake rectifying pipe (21).

2. The SCR system urea mixer according to claim 1, wherein a diameter of the intake cone pipe (11) gradually decreases in an inflow direction of exhaust gas flow.

3. The SCR system urea mixer according to claim 1, wherein the porous pipe (22) extends to a middle position of the intake straight pipe (12) .

4. The SCR system urea mixer according to claim 1, wherein the exhaust gas flow rotating mechanism is exhaust gas flow rotating blades (211) .

5. The SCR system urea mixer according to claim 1, wherein outer portions of the intake cone pipe (11) and the intake straight pipe (12) are each wrapped with a heat insulation shield.

6. The SCR system urea mixer according to claim 1, wherein a heat insulation layer is disposed in the intake cone pipe (11) .

7. An SCR system having the SCR system urea mixer according to claim 1 installed thereon.

8. The SCR system according to claim 7, wherein the SCR system is a box-type SCR system, an S-type SCR system or a U-type SCR system.

## Patentansprüche

1. SCR-System-Harnstoffmischer, der ein Außenrohr und ein in dem Außenrohr angeordnetes Innenrohr umfasst, wobei das Außenrohr ein konisches Ansaugrohr (11) und ein gerades Ansaugrohr (12) umfasst, das mit dem konischen Ansaugrohr (11) verbunden ist, wobei das Innenrohr ein gleichrichtendes Ansaugrohr (21) und ein poröses Rohr (22) umfasst, wobei das poröse Rohr (22) muffenartig im Inneren des gleichrichtenden Ansaugrohrs (21) eingesetzt ist und das gleichrichtende Ansaugrohr (21) mit einem Abgasstrom-Drehmechanismus versehen ist, der so konfiguriert ist, dass er Abgas, das in das konische Ansaugrohr (11) eintritt, dreht, wobei der Abgasstrom-Drehmechanismus teilweise im Inneren des konischen Ansaugrohrs (11) angeordnet ist, eine Harnstoffdüsen-Installationsplatte (3) an einer Ansaugöffnung des SCR-System-Harnstoffmischers vorgesehen ist und die Harnstoffdüsen-Installationsplatte (3) an einem Einlass des gleichrichtenden Ansaugrohrs (21) installiert ist.

2. SCR-System-Harnstoffmischer nach Anspruch 1, wobei ein Durchmesser des konischen Ansaugrohrs (11) in einer Einströmrichtung des Abgasstroms allmählich abnimmt.

3. SCR-System-Harnstoffmischer nach Anspruch 1, wobei sich das poröse Rohr (22) zu einer mittleren Position des geraden Ansaugrohrs (12) erstreckt.

4. SCR-System-Harnstoffmischer nach Anspruch 1, wobei es sich bei dem Abgasstrom-Drehmechanismus um Abgasstrom-Drehschaufeln (211) handelt.

5. SCR-System-Harnstoffmischer nach Anspruch 1, wobei äußere Abschnitte des konischen Ansaugrohrs (11) und des geraden Ansaugrohrs (12) jeweils mit einem Wärmeisolierschild umhüllt sind.

6. SCR-System-Harnstoffmischer nach Anspruch 1, wobei eine Wärmeisolierschicht im konischen Ansaugrohr (11) angeordnet ist.

7. SCR-System, das den SCR-System-Harnstoffmischer nach Anspruch 1 aufweist, der an ihm installiert ist.

8. SCR-System nach Anspruch 7, wobei es sich bei dem SCR-System um ein SCR-System vom Box-Typ, ein SCR-System vom S-Typ oder ein SCR-System vom U-Typ handelt.

## Revendications

1. Mélangeur d'urée de système SCR, comprenant un tuyau extérieur et un tuyau intérieur disposé dans le tuyau extérieur, dans lequel le tuyau extérieur comprend un tuyau conique d'admission (11) et un tuyau droit d'admission (12) relié au tuyau conique d'admission (11), le tuyau intérieur comprend un tuyau de rectification d'admission (21) et un tuyau poreux (22), le tuyau poreux (22) est emmanché à l'intérieur du tuyau de rectification d'admission (21), et le tuyau de rectification d'admission (21) est pourvu d'un mécanisme de rotation d'écoulement de gaz d'échappement configuré pour faire tourner le gaz d'échappement entrant dans le tuyau conique d'admission (11), le mécanisme de rotation d'écoulement de gaz d'échappement est partiellement disposé à l'intérieur du tuyau conique d'admission (11), une plaque d'installation de buse d'urée (3) est prévue au niveau d'un orifice d'admission du mélangeur d'urée de système SCR, et la plaque d'installation de buse d'urée (3) est installée au niveau d'une entrée du tuyau de rectification d'admission (21).

2. Mélangeur d'urée de système SCR selon la revendication 1, dans lequel un diamètre du tuyau conique d'admission (11) diminue progressivement dans une direction d'écoulement entrant de l'écoulement de gaz d'échappement.

3. Mélangeur d'urée de système SCR selon la revendication 1, dans lequel le tuyau poreux (22) s'étend jusqu'à une position centrale du tuyau droit d'admission (12).

4. Mélangeur d'urée de système SCR selon la revendication 1, dans lequel le mécanisme de rotation d'écoulement de gaz d'échappement est des pales de rotation d'écoulement de gaz d'échappement (211).

5. Mélangeur d'urée de système SCR selon la revendication 1, dans lequel des parties extérieures du tuyau conique d'admission (11) et du tuyau droit d'admission (12) sont chacune enveloppées d'un bouclier d'isolation thermique.

6. Mélangeur d'urée de système SCR selon la revendication 1, dans lequel une couche d'isolation thermique est disposée dans le tuyau conique d'admission (11).

7. Système SCR sur lequel est installé le mélangeur d'urée de système SCR selon la revendication 1.

8. Système SCR selon la revendication 7, dans lequel le système SCR est un système SCR de type boîte, un système SCR de type S ou un système SCR de type U.
